# EUROPEAN PATENT APPLICATION

(11) **EP 4 360 754 A1**
(43) Date of publication of application: **01.05.2024**
(21) Application number: 22827026.0
(22) Date of filing: 02.03.2022
(51) Int. Cl.: B01J 23/30, B01D 53/86, B01D 53/56

(54) **COATING-TYPE CATALYST COMPOSITION, CATALYTIC FILTER TUBE AND PREPARATION METHOD THEREFOR**

(30) Priority: 25.06.2021 CN 202110710606
(71) Applicant: Tsinghua University, Haidian District, Beijing 100084 (CN)
(72) Inventor: CHEN, Jianjun, Beijing 100084 (CN); YIN, Rongqiang, Beijing 100084 (CN); SHAN, Liang, Beijing 100084 (CN); LI, Junhua, Beijing 100084 (CN)
(74) Representative: Perani & Partners S.p.A.
(86) International application number: PCT/CN2022/078861
(87) International publication number: WO 2022/267521

(57) **Abstract**

Provided in the present disclosure are a coating-type catalyst composition, a catalytic filter tube and a preparation method therefor. The coating-type catalyst composition is composed of the following components: a catalytic system, a binder, and a plasticizer; wherein based on the total mass of the coating-type catalyst composition being 100%, the content of the catalytic system is 10.9% to 62%, the content of the binder is 1% to 7%, and the content of the plasticizer is 0.01% to 6%, wherein of a particle in the coating-type catalyst composition has a D90 particle size of 0.5 µm to 3 µm, and the coating-type catalyst composition has a yield stress of 0.2N to 8 N. The coating-type catalyst composition in the present disclosure is capable of highly dispersing on the surface and in pore channels of a base material such as ceramic fibers, and particle aggregation does not occur after calcination activation, ensuring the porosity and the air permeability of the base material, and the low filtration resistance of base material is low, and the catalytic efficiency is high.

## Description

### TECHNICAL FIELD

The present disclosure relates to a coating-type catalyst composition and a preparation method therefor and a catalytic filter tube containing the coating-type catalyst composition, and in particular to a coating-type catalyst composition and a preparation method therefor and a preparation method for a radially graded ceramic catalytic filter tube containing the coating-type catalyst composition, which belongs to the field of environmental protection and the technical field of composite filter materials.

### BACKGROUND

Flue gas emitted from glass, ceramics, steel, and cement plants, coal-fired power plants, waste incineration, and the like contains a lot of nitrogen oxides (NOx), which are the primary cause of air pollution such as photochemical smog and acid rain. In addition, flue gas emitted from industrial furnaces contains a large amount of dust, especially fine particulate matters with PM₁₀ or smaller those suspend in the atmosphere for a long time and will also cause diseases such as respiratory system diseases and cardiovascular and cerebrovascular diseases if entering human lungs. To tackle the above problems of pollution, China has introduced various relevant governance policies and raised the emission standards of polluting enterprises.

High-temperature flue gas filtration has become a major challenge for the industrial furnace industry to achieve energy conservation and emissions reduction. So far, conventional fabric filters usually purify high-temperature smoke by adopting the circulating water chilling or air cooling mode to reduce high-temperature flue gas to dew point or higher and 250°C or lower to remove dust. This method would inevitably lead to an increase in equipment and operation and maintenance costs as well as waste of thermal energy. If the high-temperature smoke can be directly filtered out at high temperatures, the loss could be avoided, which requires the filter materials to have higher temperature resistance.

NH₃ Selective Catalytic Reduction (NH₃-SCR) denitration technique is currently the most widely used technology in industry. The core technology of SCR is the SCR catalyst. Among the existing treatment processes of flue gas from industrial furnaces, the dust removal process limited by high temperatures is arranged after the denitration process, thus the honeycomb SCR catalyst will be scoured by high-concentration dust and poisoned by alkali metals, and the service life of the catalyst will be greatly reduced. It is worth noting that, the complete dust removal and denitration process is only to connect these two treatment processes in series at present, which takes a large floor area, high investment cost, and increased operating costs incurred by mismatched operating process conditions and mutual interference.

Ceramic fiber is a fibrous lightweight refractory material with excellent properties such as light weight, high temperature resistance, good thermal stability, and a low heat transfer coefficient. The ceramic filter cartridges made of the ceramic fibers have remarkable advantages of a high porosity, a small pressure drag, a good dust cleaning effect, and a high dust removal efficiency in the field of high-temperature smoke filtration. In view of the foregoing, it is an important research area to systematically combine efficient and stable SCR catalysts with high-temperature resistant dust removal materials.

In Cited Literature 1, a porous sintered ceramic such as cordierite ceramic or mullite ceramic is used as a carrier, on the surface of which a layer of ceramic fiber composite membrane is coated, and a denitration active component such as iron or copper is loaded in the pore channels of the porous ceramic. Cited Literature 2 conducts a pilot scale experiment using a V₂O₅-WO₃-TiO₂-based catalytic ceramic filter for flue gas denitration in a 3.5WMth biomass combustion plant, and under the operating conditions of 300°C and linear velocity of 2.5 cm/s, the dust removal rate of the catalytic ceramic filter reaches 99% and the denitration conversion rate may reach 83% (at an ammonia-nitrogen ratio of 0.87). However, in both of the above methods, a sintered ceramic matrix is used as a carrier, which is easy to break during dust removal and blowing, resulting in a high defective rate, a high operating pressure drop, and a complicated coating process.

In addition, there are also some coating-type catalysts in the prior art, but all of them have some problems, e.g., low loading fastness of catalyst, a low catalyst efficiency, and a failure to meet the requirements of industrial and mining denitration.

Cited Literature 3 discloses an SCR catalyst slurry made of a raw material comprising the following components: 100 parts by weight of SCR catalyst; 0.2 to 4 parts by weight of cellulose ether; 0.05 to 5 parts by weight of pore-forming agent; 5 to 40 parts by weight of alumina sol; 3 to 20 parts by weight of silica sol; 0.01 to 5 parts by weight of antifoaming agent; and 50 to 150 parts by weight of water. Cited Literature 4 discloses an enhanced long-stable denitration monolithic catalyst coating slurry and a preparation method therefor. The slurry is prepared by adding and ball milling appropriate amounts of an inorganic binder, a pH regulator, a hyperdispersant, and a foam suppressor in a V₂O₅-WO₃-TiO₂ catalytic system. The above catalyst slurry is difficult to bond firmly with ceramics, and the air flow is too large during dust removal and blowing and may cause the catalyst slurry to be blown off.

Therefore, it is an urgent technical problem to study a coating-type catalyst having high loading fastness, a high efficiency, and capable of meeting the requirements of industrial and mining denitration and being bonded on the ceramic catalytic filter tube with high strength.

### Cited Literatures:

Cited Literature 1: CN107243256A
Cited Literature 2: S Heidenreich, M Nacken, M Hackel, et al. Catalytic filter elements for combined particle separation and nitrogen oxides removal from gas streams [J]. Powder Technology, 2008, 180(1): 86-90.
Cited Literature 3: CN 108889296 A
Cited Literature 4: CN 107961786 A

### SUMMARY

### Technical Problem

In view of the technical problems existing in the prior art, the present disclosure firstly provides a coating-type catalyst composition. The coating-type catalyst composition is capable of highly dispersing on the surface and in the pore channels of the base material such as ceramic fibers without a particle aggregation phenomenon after calcination and activation, ensuring the porosity and air permeability of the base material, the filtration resistance of the base material is low, and the catalytic efficiency is high.

Furthermore, the present disclosure further provides a method for preparing a coating-type catalyst composition. The preparation method is simple and easy to implement, easy to access raw materials, and suitable for mass production.

Furthermore, the present disclosure further provides a catalytic filter tube containing the coating-type catalyst composition. The catalytic filter tube is capable of maximizing the denitration function of the ceramic filter tube and simultaneously may act with the high-temperature filtration and dust removal function of the ceramic filter tube to achieve integration of multiple functions, so as to effectively reduce the content of nitrogen oxides in the emitted flue gas while efficiently removing particulate matters from the high-temperature flue smoke.

### Solution to Problem

The present disclosure provides a coating-type catalyst composition, comprising the following components:
a catalytic system;
a binder; and
a plasticizer;
wherein based on a total mass of the coating-type catalyst composition being 100%, a content of the catalytic system is 10.9% to 62%; a content of the binder is 1% to 7%; and a content of the plasticizer is 0.01% to 6%; wherein
a particle in the coating-type catalyst composition has a D90 particle size of 0.5 µm to 3 µm, and the coating-type catalyst composition has a yield stress of 0.2 N to 8 N.

The coating-type catalyst composition according to the present disclosure, wherein the catalytic system comprises a support, a catalytically active component, and a catalytic promoter; and based on the total mass of the coating-type catalyst composition being 100%, the content of the support is 10% to 50%; the content of the catalytically active component is 0.3% to 5%; and the content of the catalytic promoter is 0.6% to 7%.

The coating-type catalyst composition according to the present disclosure, wherein the support comprises one or a combination of two or more of a titanium oxide, an iron oxide, a manganese oxide, a cerium oxide, and a molecular sieve; and/or
the catalytically active component comprises one or a combination of two or more of vanadium-based salts, iron-based salts, cerium-based salts, and copper-based salts; and/or
the catalytic promoter comprises one or a combination of two or more of ammonium metatungstate, ammonium heptamolybdate, and ammonium molybdate.

The coating-type catalyst composition according to the present disclosure, wherein the binder comprises an inorganic binder, preferably, the binder comprises one or a combination of two or more of alumina sol, silica sol, and titania sol; and/or
the plasticizer comprises one or a combination of two or more of a cellulose-based plasticizer and an epoxy-based plasticizer.

The coating-type catalyst composition according to the present disclosure, wherein the coating-type catalyst composition further comprises one or a combination of two or more of a pH regulator, an antifoaming agent, a dispersant, and water;
preferably, based on the total mass of the coating-type catalyst composition being 100%, the content of the pH regulator is 0% to 8%; the content of the antifoaming agent is 0.1% to 2%; the content of the dispersant is 0.5% to 3%, and the content of the water is 30% to 85%;
more preferably, the coating-type catalyst composition has a viscosity of 20 mPa·s to 80 mPa·s.

The coating-type catalyst composition according to the present disclosure, wherein the pH regulator comprises one or a combination of two or more of ammonium hydroxide, sodium hydroxide, potassium hydroxide, ethanolamine, oxalic acid, nitric acid, and acetic acid; and/or
the antifoaming agent comprises one or a combination of two or more of an aliphatic alkane-based monohydric alcohol and an organosilicon compound; and/or
the dispersant comprises one or a combination of two or more of ammonium polyacrylate, fatty alcohol polyoxyethylene ether, stearic acid, polyethylene glycol, and polypropylene glycol.

The present disclosure further provides a method for preparing a coating-type catalyst composition according to the present disclosure, comprising a step of mixing and ball milling respective components of the coating-type catalyst composition.

The preparation method according to the present disclosure, comprising the following steps:
dissolving a catalytically active component and a catalytic promoter into water, and adjusting a pH value with a pH regulator to obtain a precursor solution;
adding a dispersant, an antifoaming agent, and a binder to the precursor solution to obtain a premix;
adding a support to the premix to obtain a mixed precursor; and
ball milling the mixed precursor and then adding a plasticizer to obtain a coating-type catalyst composition.

The present disclosure further provides a catalytic filter tube, comprising a base material with a cavity, a tube wall of the base material being made of lapping fibers and having a fiber pore channel;
at least a part of a catalyst being present in the fiber pore channel of the tube wall to form a composite layer; and the composite layer having a thickness less than or equal to the thickness of the base material; wherein
the catalyst is derived from the coating-type catalyst composition according to the present disclosure.

The present disclosure further provides a method for preparing a catalytic filter tube according to the present disclosure, comprising: a step of coating a coating-type catalyst composition on an inner surface and/or an outer surface of a base material, and a step of allowing the coating-type catalyst composition to penetrate into a fiber pore channel and then conducting a thermal treatment;
wherein the inner surface of the base material is a surface close to the cavity, and the outer surface of the base material is a surface away from the cavity.

### Advantageous Effects of Invention

The coating-type catalyst composition of the present disclosure is capable of highly dispersing on the surface and in the pore channels of the base material such as ceramic fibers without a particle aggregation phenomenon after calcination and activation, ensuring the porosity and air permeability of the base material, the filtration resistance of the base material is low, and the catalytic efficiency is high.

Besides, the composition according to the present disclosure and the coating process thereof may have the catalytic component controlled in the fiber pore channel of the tube wall of the filter tube, so as to protect the catalytic component from being poisoned and deactivated by dust, heavy metals and the like in the flue gas.

Furthermore, the preparation method for the coating-type catalyst composition of the present disclosure is simple and easy to implement, easy to access raw materials, and suitable for mass production.

Furthermore, a ceramic fiber filter tube may be used as a filtration base material for the catalytic filter tube of the present disclosure, which is lighter, better in flexibility, higher in strength, and less liable to breakage during use compared with a sintered ceramic filter tube.

Furthermore, the catalytic filter tube of the present disclosure is not only further provided with the property of catalytic removal of nitrogen oxides, which protects the internal catalyst from the toxicity of alkali heavy metals and prolongs the service life of the catalyst, but also guarantees the precision of dust removing and filtrating fine particulate matters by the external dense layer, thus realizing the dust removal and denitration integrated function.

### BRIEF DESCRIPTION OF THE DRAWINGS

FIG. 1 shows a schematic diagram for the integrated removal principle of a ceramic catalytic filter tube of the present disclosure.
FIG. 2 shows an SEM image of a catalyst-loaded ceramic catalytic filter tube of the present disclosure.
FIG. 3 shows a photograph of a radial ceramic catalytic filter tube of the present disclosure, in which there are catalysts formed by the coating-type catalyst compositions of the present disclosure in the fiber pore channels of the tube wall.
FIG. 4 shows the operating effect during the pilot scale period in the present disclosure.
FIG. 5 shows the test results of laboratory denitration performance before and after pilot scale test in the present disclosure.

### DETAILED DESCRIPTION

The present disclosure will be described in detail below. The technical features disclosed below are described based on the representative embodiments and specific examples of the present disclosure, but the present disclosure is not limited to these embodiments and specific examples. It is to be noted that:
The numerical range represented by "numerical value A to numerical value B" used in the present specification refers to the range including the endpoint values A and B.

In the present specification, the term "more," "multiple," "a plurality of," or the like means a numerical value of 2 or more, unless otherwise stated.

In the present specification, the term "basically", "largely" or "substantially" means an error of 5% or less, or 3% or less or 1% or less than the related perfect or theoretical standard.

In the present specification, "%" always indicates a mass percentage content, unless otherwise specified.

In the present specification, the term "may" involves both the meaning of doing something and the meaning of not doing something.

In the present specification, the term "optional" or "optionally" means that the event or situation described subsequently may or may not occur, and the description includes the situation where the event occurs and the situation where the event does not occur.

Phrases such as "some specific/preferred embodiments", "other specific/preferred embodiments", and "embodiments" mentioned in the present specification mean that particular elements (for example, features, structures, properties and/or characteristics) described in relation to this embodiment are included in at least one of the embodiments described herein, and may or may not exist in other embodiments. Additionally, it should be understood that the elements may be combined in any suitable manner into various embodiments.

In the present specification, "room temperature", "normal temperature" or the like, if present, may generally be 10°C to 40°C.

In the present specification, the term "D90 particle size" means a particle size of a sample when its cumulative size distribution reaches 90%. Its physical meaning is that 90% of particles having particle sizes smaller than this particle size.

### <First Aspect>

The first aspect of the present disclosure firstly provides a coating-type catalyst composition, comprising the following components:
a catalytic system;
a binder; and
a plasticizer;
based on a total mass of the coating-type catalyst composition being 100%, the content of the catalytic system is 10.9% to 62%; the content of the binder is 1% to 7%; and the content of the plasticizer is 0.01% to 6%; wherein
a particle in the coating-type catalyst composition has a D90 particle size of 0.5 µm to 3 µm, for example, 1 µm, 1.5 µm, 2 µm, 2.5 µm, or the like; and the coating-type catalyst composition has a yield stress of 0.2 N to 8 N, for example, 1 N, 2 N, 3 N, 4 N, 5 N, 6 N, 7 N, or the like. When the coating-type catalyst composition has a D90 particle size of 0.5 µm to 3 µm and a yield stress of 0.2 N to 8 N, it is advantageous for the coating-type catalyst composition to penetrate into the base material, which is more conducive to the preparation of the catalytic filter tube.

The composition of the coating-type catalyst composition of the present disclosure is simple. Moreover, the coating-type catalyst composition is capable of highly dispersing on the surface and in the pore channels of the base material such as ceramic fibers without a particle aggregation phenomenon after calcination and activation, ensuring the porosity and air permeability of the base material, and the filtration resistance of the base material is low.

### Catalytic System

The catalytic system is not particularly limited in the present disclosure, and may be applied to a catalytic system usable for denitration in the art. In the present disclosure, the content of the catalytic system is 10.9% to 62%, for example, 15%, 20%, 25%, 30%, 35%, 40%, 45%, 50%, 55%, 60%, or the like based on the total mass of the coating-type catalyst composition being 100%. When the content of the catalytic system is 10.9% to 62%, it is possible to realize controllable and firm coating, and achieve an excellent catalytic effect.

In some specific embodiments, in order to maximize the catalysis of the catalytic system of the present disclosure, the catalytic system of the present disclosure comprises a support, a catalytically active component, and a catalytic promoter. Specifically, based on the total mass of the coating-type catalyst composition being 100%, the content of the support is 10% to 50%, for example, 15%, 20%, 25%, 30%, 35%, 40%, 45%, or the like; the content of the catalytically active component is 0.3% to 5%, for example, 0.5%, 1%, 1.5%, 2%, 2.5%, 3%, 3.5%, 4%, 4.5%, or the like; and the content of the catalytic promoter is 0.6% to 7%, for example, 1%, 1.5%, 2%, 2.5%, 3%, 3.5%, 4%, 4.5%, 5%, 5.5%, 6%, 6.5%, or the like. When the contents of the support, the catalytically active component, and the catalytic promoter are all within the ranges of the present application, an excellent denitration and catalytic effect may be achieved.

The support is not particularly limited in the present disclosure, and may be some catalyst supports commonly used in the art, for example, one or a combination of two or more of titanium oxides (TiO₂), iron oxides (Fe₂O₃, FeO, etc.), manganese oxides (MnO₂, Mn₃O₄, etc.), cerium oxides (CeO₂, Ce₂O₃), and molecular sieves (aluminosilicate molecular sieves, modified aluminosilicate molecular sieves, aluminophosphate molecular sieves and modified aluminophosphate molecular sieves, etc.).

As for the catalytically active component, the specific constitution of the catalytically active component of the present disclosure is not particularly limited. The catalytically active component may be some catalytically active components commonly used in the art, for example, one or a combination of two or more of vanadium-based salts (ammonium metavanadate, vanadyl sulfate, vanadium tetrachloride, etc.), iron-based salts (ferric nitrate, ferric sulfate, ferrous nitrate, ferrous sulfate, ferric chloride, ferrous chloride, etc.), cerium-based salts (cerium nitrate, cerium sulfate, cerium chloride, etc.), and copper-based salts (copper nitrate, copper sulfate, cuprous nitrate, cuprous sulfate, copper chloride, cuprous oxide, etc.).

The catalytic promoter is not particularly limited in the present disclosure either, and may be some catalytic promoters commonly used in the art. The catalytic promoter includes one or a combination of two or more of ammonium metatungstate, ammonium heptamolybdate, and ammonium molybdate.

### Binder

By adding a binder, the present disclosure enables the coating-type catalyst composition to be bonded to the base material. In the present disclosure, in consideration of the bonding effect, the content of the binder is 1% to 7%, for example, 1.5%, 2%, 2.5%, 3%, 3.5%, 4%, 4.5%, 5%, 5.5%, 6%, 6.5%, or the like based on the total mass of the coating-type catalyst composition being 100%.

The specific components of the binder of the present disclosure are not particularly limited, and may be some binders commonly used in the art, for example, organic binders and/or inorganic binders. In consideration of the bonding strength, inorganic binders are preferably used in the present disclosure, for example, one or a combination of two or more of alumina sol, silica sol, and titania sol.

Silica sol is a colloidal solution, and its molecular formula is expressed as mSiO₂·nH₂O. Because colloidal particles are fine (10 to 20 nm) with a considerable specific surface area and a low viscosity and can basically penetrate where water can penetrate, they have very good dispersibility and permeability when mixed with other substances. When the moisture of the silica sol evaporates, the colloidal particles are firmly attached to the surface of the object, and silica-oxygen bonding forms between the particles. Thus silica sol is a good binder. Preferably, the inorganic binder may be a silica sol having a mass concentration of 20% to 30% and a pH value of 3 to 8.

### Plasticizer

The present disclosure uses a plasticizer to adjust the rheological property and permeability of the mixed precursor of the catalyst, so that the coating slurry of the catalyst is highly compatible with the base material.

In the present disclosure, the content of the plasticizer is 0.01% to 6%, for example, 0.01%, 0.05%, 0.1%, 1%, 1.5%, 2%, 2.5%, 3%, 3.5%, 4%, 4.5%, 5%, 5.5%, or the like based on the total mass of the coating-type catalyst composition being 100%. When the content of the plasticizer is 0.01% to 6%, a mixed precursor with both suitable rheological property and permeability may be obtained, and thus a coating-type catalyst composition with excellent properties may be obtained.

Additionally, the specific components of the plasticizer of the present disclosure are not particularly limited, and may be some components commonly used in the art. For example, the plasticizer may include one or a combination of two or more of a cellulose-based plasticizer and an epoxy-based plasticizer.

To be specific, the cellulose-based plasticizer includes one or a combination of two or more of cellulose, hydroxypropyl cellulose, hydroxyethyl cellulose, starch, etc.; the epoxy-based plasticizer includes one or a combination of two or more of polyethylene oxide, epoxidized oil, epoxy fatty acid monoester, and epoxy tetrahydrophthalate.

### Other Components

Considering the catalytic effect, bonding strength and the like, the coating-type catalyst composition of the present disclosure may further comprise one or a combination of two or more of a pH regulator, an antifoaming agent, a dispersant and water, etc.

As for the pH regulator, the present inventors have found that the adjustment to the pH value makes it more favorable to bond the coating-type catalyst composition to the base material. Preferably, the content of the pH regulator is 0% to 8%, for example, 0.1%, 0.5%, 1%, 1.5%, 2%, 2.5%, 3%, 3.5%, 4%, 4.5%, 5%, 5.5%, 6%, 6.5%, 7%, 7.5%, or the like based on the total mass of the coating-type catalyst composition being 100%. When the content of the pH regulator is 0% to 8%, the bonding of the coating-type catalyst composition to the base material is maximized.

The specific components of the pH regulator are not particularly limited in the present disclosure, and may be some acid-base regulators commonly used in the art. For example, the pH regulator comprises one or a combination of two or more of ammonium hydroxide, sodium hydroxide, potassium hydroxide, ethanolamine, oxalic acid, nitric acid, and acetic acid.

As for the antifoaming agent, it is intended to eliminate air bubbles in the coating-type catalyst composition, and may be added in the present disclosure according to specific circumstances. Preferably, the content of the antifoaming agent is 0.1% to 2%, for example, 0.3%, 0.5%, 0.8%, 1%, 1.2%, 1.5%, 1.8%, or the like based on the total mass of the coating-type catalyst composition. When the content of the antifoaming agent is 0.1% to 2%, the air bubbles in the coating-type catalyst composition may be eliminated to the greatest extent.

The specific components of the antifoaming agent are not particularly limited in the present disclosure, and may be some antifoaming agents commonly used in the art. The antifoaming agent includes one or a combination of two or more of an aliphatic alkane-based monohydric alcohol (*e.g*., isopropanol and *n*-octanol) and an organosilicon compound (*e.g*., silicone oil and dimethyl silicone oil, etc.).

As for the dispersant, it may be used to make the catalytic system of the present disclosure dispersed, so that its contact area is larger than that of conventional SCR catalysts, and the catalytically active component may be effectively utilized. Preferably, the content of the dispersant is 0.5% to 3%, for example, 0.8%, 1%, 1.2%, 1.5%, 1.8%, 2%, 2.2%, 2.5%, 2.8%, or the like based on the total mass of the coating-type catalyst composition being 100%. When the content of the dispersant is 0.5% to 3%, the catalytic system of the present disclosure may be highly dispersed, and the catalytically active component may be fully utilized.

The specific components of the dispersant are not particularly limited in the present disclosure, and may be some dispersants commonly used in the art. Specifically, the dispersant comprises one or a combination of two or more of ammonium polyacrylate, fatty alcohol polyoxyethylene ether, stearic acid, polyethylene glycol, and polypropylene glycol.

In addition, the coating-type catalyst composition of the present disclosure may further contain an appropriate amount of water to thereby form a catalyst slurry, so that it is easily coated on the base material. Preferably, the content of the water is 30% to 85%, for example, 35%, 40%, 45%, 50%, 55%, 60%, 65%, 70%, 75%, or the like based on the total mass of the coating-type catalyst composition. When the content of the water is 30% to 85%, it is more conducive to coating.

The coating-type catalyst composition of the present disclosure may maximize the denitration function of the base material, and simultaneously may act with the high-temperature filtration and dust removal function of the base material to achieve integration of multiple functions, so as to effectively reduce the content of nitrogen oxides in the emitted flue gas while efficiently removing particulate matters from the high-temperature smoke.

### <Second Aspect>

The second aspect of the present disclosure provides a method for preparing a coating-type catalyst composition according to the present disclosure, comprising a step of mixing and ball milling respective components of the coating-type catalyst composition.

In some specific embodiments, the preparation method comprises the following steps:
dissolving a catalytically active component and a catalytic promoter into water, and adjusting a pH value with a pH regulator to obtain a precursor solution;
adding a dispersant, an antifoaming agent, and a binder to the precursor solution to obtain a premix;
adding a support to the premix to obtain a mixed precursor; and
ball milling the mixed precursor and then adding a plasticizer to obtain a coating-type catalyst composition.

In some specific embodiments, the precursor solution is prepared by the following steps: weighing and dissolving the catalytically active component metal salt and the catalytic promoter metal salt into an appropriate amount of deionized water at 10°C to 60°C, cooling to room temperature when necessary, and then adding an appropriate amount of a pH regulator dropwise to adjust the pH to a desired range to obtain a precursor solution. The pH range is not particularly limited in the present disclosure, and may be adjusted as required.

Furthermore, the premix is prepared by the following steps: adding a dispersant, an antifoaming agent, and a binder to the above precursor solution, and mixing thoroughly to obtain a premix. The mixing method is not particularly limited in the present disclosure, and may be methods commonly used in the art, for example, stirring in a high-speed shear mulser, preferably stirring in the high-speed shear mulser for 5 min to 30 min.

Furthermore, the mixed precursor is prepared by the following steps: adding a support to the above premix, and mixing thoroughly to obtain a mixed precursor. The mixing method is not particularly limited in the present disclosure, and may be methods commonly used in the art, for example, ultrasound, mechanical stirring, etc, and it is preferable to use a mechanical stirring. In general, the time for mechanical stirring may be 15 to 60 min.

As for ball milling, the mixed precursor may be placed in a ball milling device for ball milling. The conditions for ball milling are not particularly limited in the present disclosure as long as they enable the coating-type catalyst composition to have a D90 particle size of 0.5 µm to 3 µm and a yield stress of 0.2 N to 8 N. Specifically, during the ball milling, the rotating speed is 500 rpm to 1500 rpm, and the time is 30 min to 180 min.

After ball milling, a plasticizer may be added. By adding the plasticizer, the viscosity of the coating-type catalyst composition may be 20 mPa·s to 80 mPa·s and is appropriate, which is more conducive to bonding the coating-type catalyst composition to the base material. Specifically, after adding the plasticizer, mechanical stirring or ultrasonic treatment may be carried out for 5 min to 10 min to make it fully mixed.

### <Third Aspect>

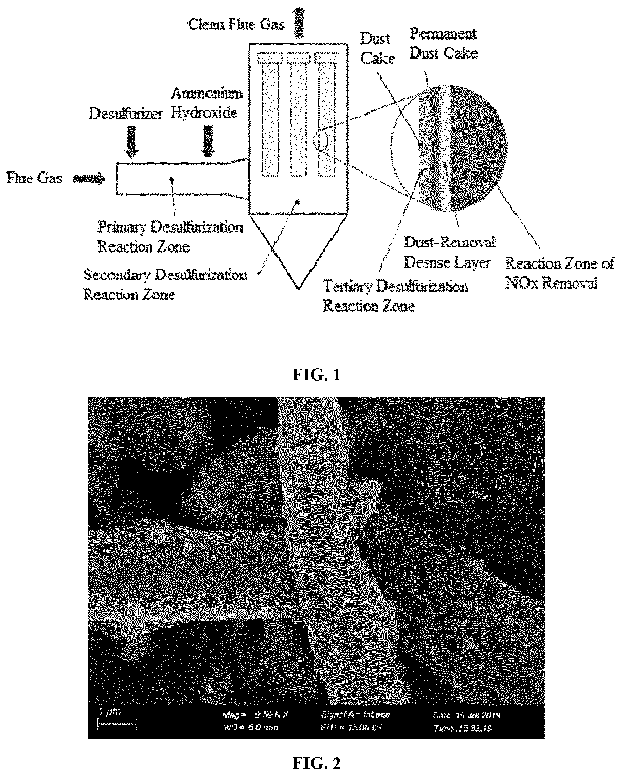

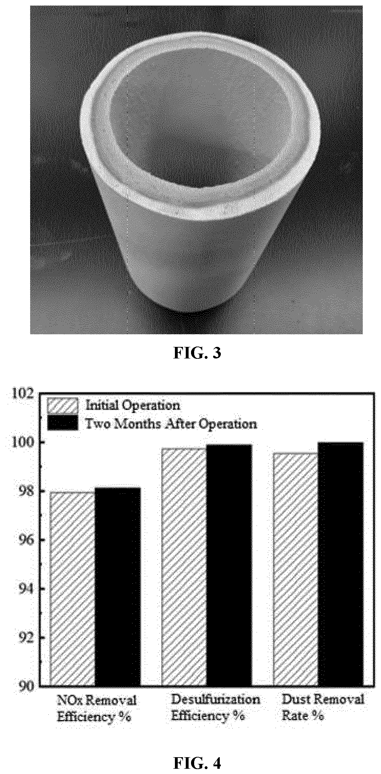

As shown in FIG. 2 and FIG. 3, the third aspect of the present disclosure provides a catalytic filter tube, comprising a base material with a cavity, a tube wall of the base material being made of lapping fibers and having a fiber pore channel;
at least a part of a catalyst being formed in the fiber pore channel of the tube wall to obtain a composite layer; and the composite layer having a thickness less than or equal to the thickness of the base material; wherein
the catalyst is derived from the coating-type catalyst composition according to the first aspect of the present disclosure.

The catalyst prepared from the coating-type catalyst composition of the present disclosure has a far larger contact area than those of conventional SCR catalysts. Under a filtration speed of 0.5 m/min to 1.2 m/min and a temperature window of 230°C to 420°C, the denitration efficiency may reach 96% or more, and the dust removal rate of the catalytic filter tube is still maintained at 99.99% or more, which meets the emission reduction requirements for NOₓ and particulate matters in a wide temperature range.

In some specific embodiments, the present disclosure uses a ceramic fiber filtration tube as a base material, which is lighter, better in flexibility, higher in strength, and less liable to breakage during use compared with a sintered ceramic filter tube.

In some specific embodiments, the thickness difference between the tube wall and the composite layer of the catalytic filter tube of the present disclosure may be 2 mm to 15 mm. As a result, the dense layer on the outer surface of the base material is retained, and the dust removal efficiency is guaranteed. The thickness of the composite layer is not particularly limited in the present disclosure as long as the dust removal performance of the catalytic filter tube is not affected. Preferably, the thickness of the composite layer may be 5 mm to 18 mm.

Furthermore, the composite layer of the present disclosure may be obtained by continuous coating or intermittent coating, which may be set as desired.

The catalytic filter tube of the present disclosure not only has excellent catalytic performance and dust removal performance, but also may save floor space and investment costs.

### <Fourth Aspect>

The fourth aspect of the present disclosure provides a method for preparing a catalytic filter tube according to the third aspect of the present disclosure, comprising: a step of coating the coating-type catalyst composition on an inner surface and/or an outer surface of the base material, and a step of allowing the coating-type catalyst composition to penetrate into a fiber pore channel and then conducting a thermal treatment; wherein the inner surface of the base material is a surface close to the cavity, and the outer surface of the base material is a surface away from the cavity.

In some specific embodiments, the coating-type catalyst composition is coated only on the inner surface of the base material, and the thermal treatment is carried out after the coating-type catalyst composition penetrating into the fiber pore channels. The composition of the present disclosure and the coating process thereof may control the catalytic component being in the fiber pore channels of the tube wall of the catalytic filter tube while being not present on the outer surface of the filter tube, so that the catalytic component is protected from being poisoned and deactivated by dust, heavy metals and the like in the flue gas.

The coating method is not particularly limited in the present disclosure, and may be some coating methods commonly used in the art, for example, spin coating, spray coating, vacuum spraying, and the like. In some specific embodiments, the present disclosure adopts spin coating, such as a directional spin coating process, which enables the catalytic system to be highly dispersed on the surface and in the pore channels of the ceramic fiber without a particle aggregation phenomenon after calcination and activation, ensuring the porosity and air permeability of the catalytic filter tube, and the filtration resistance of the catalytic filter tube is low.

Moreover, with the adoption of the directional spin coating process of the present disclosure, the coating-type catalyst composition may be penetrated from the inner side to the outer side or from the outer side to the inner side, achieving a coating-type catalyst composition on the inner side or outer side of the base material. Under specific circumstances, the thickness of the coating for coating the catalytic layer may be controlled to retain the dense layer on the outer surface of the base material, such that the dust removal efficiency is guaranteed. At the same time, the particles with a catalytic function are uniformly dispersed in the fibers on the inner wall of the base material to be protected from being poisoned by heavy metals and alkali metals, ensuring the service life of the catalyst on the base material. Besides, the loading amount of the catalyst is controllable and a multistage catalytic layer may be constructed to realize the catalytic function of the base material.

Specifically, in the present disclosure, the directional spin coating allows the catalyst slurry to immerse in the pore channels of the base material. The spin coating is carried out for 5 min to 20 min at a rotating speed of 5 r/min to 200 r/min. The coating thickness of the catalyst is controlled at 5 mm to 18 mm, and the thickness difference between the tube wall and the composite layer of the catalytic filter tube of the present disclosure may be 2 mm to 15 mm.

In some specific embodiments, after coating, *e.g*., the coating-type catalyst composition accounts for 5% to 20% of the mass (*i.e*., the loading amount) of the base material, the coated product is subjected to a thermal treatment. The thermal treatment may typically include drying and calcination.

The drying temperature may be 60°C or higher and 150°C or lower. For example, drying may be carried out at a temperature of 90°C to 135°C. The drying time is not particularly limited, and may usually be 1 h to 5 h.

As for calcination, the calcination includes calcination carried out in an inert atmosphere and/or air atmosphere. In order to adequately obtain a desired catalytic filter tube, the present disclosure may carry out the calcination at a high temperature at a certain heating rate.

In addition, the heating method for the above calcination of the present disclosure is not particularly limited, and may be changed depending on the specific instruments or devices. In some specific embodiments, it is possible to adopt a heating rate of 2°C/min, to 10°C/min, preferably 3°C/min, to 9°C/min.

The calcination temperature and time are not particularly limited in the present disclosure, and may be set as required. Specifically, in the present disclosure, the calcination temperature may be 270°C to 550°C, and the calcination time may be 2 h to 6 h.

The catalytic filter tubes of the present disclosure may be applied to various industrial smoke control fields, in particular to a flue gas multi-pollutant collaboratively controlled technology. This technology specifically relates to collaborative control of dust and nitrogen oxides in the flue gas from industries such as waste incineration, steel sintering, nonferrous metallurgy, glass manufacturing, and cement co-processing of solid wastes, etc.

### Examples

The embodiments of the present disclosure will be described in detail below with reference to the examples. However, a person skilled in the art will appreciate that the following examples are only intended to illustrate the present disclosure, and shall not be regarded as limiting the scope of the present disclosure. Where specific conditions are not indicated in the examples, conventional conditions or the conditions recommended by the manufacturer shall be followed. Where the manufacturers of the reagents or instruments used are not indicated, all of them are commercially-available conventional products.

### Example 1

### (1) Preparation of coating-type catalyst composition

1) 2.05 kg of ammonium metavanadate as a catalytically active component and 4.06 kg of ammonium paratungstate as a catalytic promoter were weighed and dissolved in 70 kg of deionized water at about 55°C, and cooled to room temperature. Thereafter, 2 kg of ammonium hydroxide at a mass concentration of 25% to 28% was added dropwise to adjust the pH value to 9 to 10 to obtain a mixed solution A (a precursor solution).
2) 3 kg of polyethylene glycol as a dispersant, 0.5 kg of isopropanol as an antifoaming agent, and 10 kg of silica sol having a pH of 8 and a solid content of 30% as a binder were quantitatively weighed and added to the above mixed solution A, and stirred in a high-speed shear mulser for 10 min to obtain a mixed solution B (a premix).
3) 60 kg of anatase-type titanium dioxide was quantitatively weighed and added to the above mixed solution B, mechanically stirred for 15 min, and mixed thoroughly to obtain a mixed solution C (a mixed precursor).
4) The above mixed solution was placed in a ball mill tank, and ball milled for 60 min at a rotating speed of 500 r/min. Thereafter, 0.02 kg of cellulose as a plasticizer was added, and stirred for 5 min to obtain a coating-type catalyst composition having a viscosity of 20 mPa·s, a yield stress of 1 N, and a D90 particle size of 3 µm.

### (2) Preparation of high-temperature radially graded ceramic catalytic filter tube

1) The coating-type catalyst composition was spin coated in the thickness direction of a ceramic filter tube in a spin cycle manner. The thickness of the ceramic filter tube was 20 mm. The rotating speed was 50 r/min. The coating time was 5 min. The loading amount of the coating-type catalyst composition was 7% based on the total mass of the ceramic filter tube.
2) The coated ceramic filter tube loaded with the coating-type catalyst composition was dried at 130°C for 1 h.
3) The dried ceramic filter tube was calcined at a high temperature of 270°C for 2 h with a heating rate of 2°C/min to obtain a high-temperature radially graded ceramic catalytic filter tube. A part of the catalyst was formed in the fiber pore channels of the tube wall of the ceramic filter tube to obtain a composite layer, and the thickness of the composite layer was 15 mm.

### Example 2

### (1) Preparation of coating-type catalyst composition

1) The catalytically active components, *i.e*., 1.05 kg of ammonium metavanadate and 3.03 kg of ferric nitrate were weighed and dissolved in 70 kg of deionized water at about 55°C, and cooled to room temperature. Thereafter, 1.5 kg of oxalic acid was added dropwise to adjust the pH value to 1 to 2 to obtain a mixed solution A (a precursor solution).
2) 2.5 kg of polyethylene glycol as a dispersant, 0.5 kg of isopropanol as an antifoaming agent, and 10 kg of silica sol having a pH of 3 and a solid content of 30% as a binder were quantitatively weighed and added to the above mixed solution A, and stirred in a high-speed shear mulser for 10 min to obtain a mixed solution B (a premix).
3) 60 kg of anatase-type titanium dioxide was quantitatively weighed and added to the above mixed solution B, mechanically stirred for 15 min, and mixed thoroughly to obtain a mixed solution C (a mixed precursor).
4) The above mixed solution was placed in a ball mill tank, and ball milled for 100 min at a rotating speed of 800 r/min. Thereafter, 0.1 kg of cellulose and 0.1 kg of starch as plasticizers were added, and stirred for 10 min to obtain a coating-type catalyst composition having a viscosity of 40 mPa·s, a yield stress of 4 N, and a D90 particle size of 2 µm.

### (2) Preparation of high-temperature radially graded ceramic catalytic filter tube

1) The coating-type catalyst composition was spin coated in the thickness direction of a ceramic filter tube in a spin cycle manner. The thickness of the ceramic filter tube was 22 mm. The rotating speed was 100 r/min. The coating time was 10 min. The loading amount of the coating-type catalyst composition was 9% based on the total mass of the ceramic filter tube.
2) The coated ceramic filter tube loaded with the coating-type catalyst composition was dried at 110°C for 2 h.
3) The dried ceramic filter tube was calcined at a high temperature of 450°C for 4 h with a heating rate of 5°C/min to obtain a high-temperature radially graded ceramic catalytic filter tube. At least a part of the catalyst was formed in the fiber pore channels of the tube wall of the ceramic filter tube to obtain a composite layer, and the thickness of the composite layer was 15 mm.

### Example 3

### (1) Preparation of coating-type catalyst composition

1) The catalytically active components, *i.e*., 2.9 kg of ferric nitrate and 2.5 kg of cerium nitrate were weighed and dissolved in 80 kg of deionized water at room temperature. Thereafter, 1.5 kg of ammonium hydroxide at a mass fraction of 25% to 28% was added dropwise to adjust the pH value to 8 to 9 to obtain a mixed solution A (a precursor solution).
2) 3 kg of ammonium polyacrylate as a dispersant, 0.2 kg of *n*-octanol as an antifoaming agent, and 8 kg of silica sol having a pH of 8 and a solid content of 30% as a binder were quantitatively weighed and added to the above mixed solution A, and stirred in a high-speed shear mulser for 15 min to obtain a mixed solution B (a premix).
3) 50 kg of anatase-type titanium dioxide was quantitatively weighed and added to the above mixed solution B, mechanically stirred for 30 min, and mixed thoroughly to obtain a mixed solution C (a mixed precursor).
4) The above mixed solution was placed in a ball mill tank, and ball milled for 120 min at a rotating speed of 1000 r/min. Thereafter, 2.5 kg of polyethylene oxide as a plasticizer was added, and stirred for 10 min to obtain a coating-type catalyst composition having a viscosity of 60 mPa·s, a yield stress of 6 N, and a D90 particle size of 1 µm.

### (2) Preparation of high-temperature radially graded ceramic catalytic filter tube

1) The coating-type catalyst composition was spin coated in the thickness direction of a ceramic filter tube in a spin cycle manner. The thickness of the ceramic filter tube was 20 mm. The rotating speed was 100 r/min. The coating time was 10 min. The loading amount of the coating-type catalyst composition was 10% based on the total mass of the ceramic filter tube.
2) The coated ceramic filter tube loaded with the coating-type catalyst composition was dried at 90°C for 10 h.
3) The dried ceramic filter tube was calcined at a high temperature of 550°C for 6 h with a heating rate of 10°C/min to obtain a high-temperature dust removal and denitration integrated ceramic. At least a part of the catalyst was formed in the tube wall of the ceramic filter tube to obtain a composite layer, and the thickness of the composite layer was 18 mm.

### Example 4

### (1) Preparation of coating-type catalyst composition

1) 2.05 kg of ammonium metavanadate as a catalytically active component and 1.06 kg of ammonium heptamolybdate as a catalytic promoter were weighed and dissolved in 70 kg of deionized water at about 55°C, and cooled to room temperature. Thereafter, 1 kg of ammonium hydroxide at a mass concentration of 25% to 28% was added dropwise to adjust the pH value to 9 to 10 to obtain a mixed solution A (a precursor solution).
2) 3 kg of polyethylene glycol as a dispersant, 0.5 kg of isopropanol as an antifoaming agent, and 10 kg of silica sol having a pH of 8 and a solid content of 30% as a binder were quantitatively weighed and added to the above mixed solution A, and stirred in a high-speed shear mulser for 10 min to obtain a mixed solution B (a premix).
3) 60 kg of anatase-type titanium dioxide was quantitatively weighed and added to the above mixed solution B, mechanically stirred for 15 min, and mixed thoroughly to obtain a mixed solution C (a mixed precursor).
4) The above mixed solution was placed in a ball mill tank, and ball milled for 180 min at a rotating speed of 1200 r/min. Thereafter, 3.5 kg of cellulose as a plasticizer was added, and stirred for 10 min to obtain a coating-type catalyst composition having a viscosity of 80 mPa·s, a yield stress of 8 N, and a D90 particle size of 0.5 µm.

### (2) Preparation of high-temperature radially graded ceramic catalytic filter tube

1) The ceramic filter tube was immersed in the above coating-type catalyst composition for 60 s to obtain a ceramic filter tube coated with the coating-type catalyst composition. The thickness of the ceramic filter tube was 10 mm. The loading amount of the coating-type catalyst composition was 12% based on the total mass of the ceramic filter tube.
2) The coated ceramic filter tube loaded with the coating-type catalyst composition was dried at 90°C for 24 h.
3) The dried ceramic filter tube was calcined at a high temperature of 550°C for 6 h with a heating rate of 10°C/min to obtain a high-temperature dust removal and denitration integrated ceramic. At least a part of the catalyst was formed in the fiber pore channels of the tube wall of the ceramic filter tube to obtain a composite layer, and the thickness of the composite layer was 10 mm.

### Performance Tests

### 1. Resistance Experiment

The catalytic filter tubes of Example 1 and Example 2 were ring-cut into test samples with a radial length of 20 cm. The test samples were placed in a reactor. The reactor was tightened and sealed. Nitrogen was introduced into the reactor. The gas filtration rate was set to 1 m/min. The gas pressure inside and outside the filter tube was tested, and converted to the resistance difference. The results showed that the pressure resistance was 80 Pa to 400 Pa in case of no dust cakes.

The experimental results showed that the high-temperature dust removal and denitration integrated filter tube of the present disclosure had good air permeability and had excellent dust removal and denitration performance.

### 2. Purging Experiment

The test method was as follows: Four samples of the ceramic catalytic filter tubes of Example 3 with a length of 20 cm were heated for 1 h under the condition of 120°C, weighed, and marked as m₁. After cooling to room temperature, the inner surface was purged with compressed air for 60 s, and the air gun was less than 3 cm away from the inner surface of the support. After completion of the purging, the samples of the ceramic catalytic filter tubes were reheated for 1 h under the condition of 120°C, weighed, and marked as m₂. The mass of the catalyst was marked as m₃. The expulsion rate was calculated based on the following formula: (m₁-m₂) /m₃×100%. The results were as shown in Table 1.

**Table 1 Test Results of Expulsion Rates of Ceramic Catalytic Filter Tubes Prepared in Example 3**

| Purging Pressure | m_{1/g} | m_{2/g} | m_{3/g} | Expulsion Rate/% |
|---|---|---|---|---|
| 2.0 kPa | 650.1 | 650.0 | 60.0 | Approx. 0.16 |
| 3.0 kPa | 660.5 | 660.5 | 60.3 | 0 |
| 4.0 kPa | 630.0 | 629.8 | 60.0 | Approx. 0.3 |
| 5.0 kPa | 645.0 | 644.8 | 59.8 | Approx. 0.3 |

The test results of the expulsion rates of the ceramic catalytic filter tubes prepared by the above method were shown in Table 1. The expulsion rate of the ceramic catalytic filter tube purged at high air pressure of 5 kPa was only about 0.3%, indicating that the catalyst had high loading fastness and strong firmness, and it generally required a large force to peel the catalyst off. Therefore, whatever operating conditions were the ceramic catalytic filter tubes of the present disclosure used, the catalysts in the fiber pore channels of the tube wall of the ceramic catalytic filter tube were not easily peeled off.

### 3. Pilot scale Test of Flue Gas

The principle of the pilot scale test was as shown in FIG. 1. The ceramic catalytic filter tube could effectively remove SO₂, SO₃, and other unconventional pollutants such as HF and HCl by dry desulfurization, while efficiently removing NOₓ and particulate matters. The specific operation involved the following several steps:
(1) The high-temperature flue gas in a glass furnace was cooled to the optimal denitration temperature (340°C to 380°C) via a heat exchanger, and then treated by a waste heat boiler before leading the bypass flue gas out for test, and the inlet flue gas temperature could reach 300°C to 330°C.
(2) Baking soda as a desulfurizer was fed into a flue gas pipeline through a feeding system. After the baking soda reacted completely with SO₂ in the high-temperature flue gas, solid particle products and the particulate matters in the flue gas were blocked on the outer wall of the radially graded ceramic catalytic filter tube to form a filter cake layer, achieving the desulfurization and dust removal effect.
(3) The ammonium hydroxide was atomized by compressed air and sprayed into the flue gas pipeline with a spray gun.
(4) The mixed flue gas entered an integrated reactor, and under the action of a deflector, both NOₓ and NH₃ in the flue gas uniformly passed through the catalyst attached to the inner layer of the radially graded ceramic catalytic filter tube and undergone a selective catalytic reduction reaction. The resulting N₂ and H₂O were separated from the system from the inner side of the ceramic fiber filter tube, thus completing the denitration process of the flue gas.
(5) The radially graded ceramic catalytic filter tube was fixed inside the dust remover and equipped with a differential pressure transmitter. With the increase of the thickness of the filter cake layer, the pressure difference between the inside and the outside of the ceramic fiber filter tube increased, accordingly. The timed pulse dust cleaning of the blowing device was started to blow the dust outside the ceramic fiber filter tube to the ash hopper, so that the system resistance was kept at a low level.
(6) The treated flue gas up to the standard was sent to the chimney through the induced draft fan and discharged to complete the whole desulfurization, denitration and dust removal process.

In a plate glass production line, the flue gas from the furnace was treated by an integrated technology using baking soda as a desulfurization reactant and 20% ammonium hydroxide as a denitration reducing agent. The filtration wind speed of the dust remover was designed to be 1 m/min. The inlet and outlet parameters of the flue gas from the furnace were listed in Table 2.

The ceramic catalytic filter tubes of Example 4 were used for the relevant tests. The results were as shown in Table 2 below and FIG. 4.

**Table 2**

| | | | |
|---|---|---|---|
| Flue gas amount at inlet /(m³/h) | 3000 | Flue gas temperature at inlet /°C | 300 - 390 |
| NOₓ concentration at inlet /(mg/m³) | 500 to 1500 | NOₓ concentration at outlet /(mg/m³) | <45 |
| SOz concentration at inlet /(mg/m³) | 500 to 1500 | SOz concentration at outlet /(mg/m³) | <15 |
| Dustiness at inlet /(mg/m³) | 50 to 1000 | Dustiness at outlet /(mg/m³) | <5 |

As could be seen from Table 2 and FIG. 4, the ceramic catalytic filter tubes of the present disclosure had excellent denitration performance, desulfurization performance, and dust removal rate.

### 4. Denitration Experiment

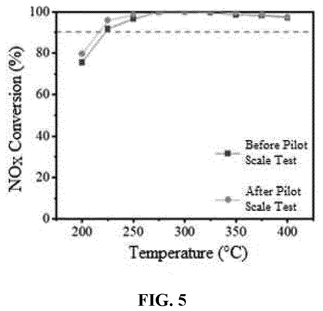

Before and after the pilot scale test, the catalytic filter tubes prepared in Example 4 were ring-cut into test samples with a radial length of 20 cm respectively, and placed in a reactor. The reactor was tightened and sealed. Then the simulative gas was formulated under the following gas formulating conditions: controlling the filtration rate of 1 m/min at 200°C, 500 ppm NO, 500 ppm NH₃, 6% O₂. After completion of gas formulation, the reactor was heated to the highest temperature of 400°C. The gas concentrations at the outlet of the reactor were detected before and after the pilot scale test with a detector, and were finally converted to the catalytic efficiencies. The results were shown in FIG. 5.

The experimental results showed that before and after the pilot scale test on the high-temperature radially graded ceramic catalytic filter tubes prepared in the present disclosure, both the denitration efficiencies could reach 96% or more at the filtration rate of 0.5 m/min to 1.2 m/min and in the temperature range of 230°C to 420°C, and the dust removal rates reached 99.99% or above.

It is to be noted that while the technical solutions of the present disclosure have been introduced with reference to the specific examples, a person skilled in the art can appreciate that the present disclosure should not be limited thereto.

Although the examples of the present disclosure have been described above, the above descriptions are exemplary, but not exhaustive; and the disclosed examples are not limiting. A number of modifications and variations may occur to a person skilled in the art without departing from the scopes and spirits of the described examples. The terms in the present disclosure are selected to provide the best explanation on the principles and practical applications of the examples and the technical improvements to the arts on market, or to make the examples described herein understandable to a person skilled in the art.

## Claims

1. A coating-type catalyst composition, comprising the following components:
a catalytic system;
a binder; and
a plasticizer;
wherein based on a total mass of the coating-type catalyst composition being 100%, a content of the catalytic system is 10.9% to 62%; a content of the binder is 1% to 7%; and a content of the plasticizer is 0.01% to 6%; wherein
a particle in the coating-type catalyst composition has a D90 particle size of 0.5 µm to 3 µm, and the coating-type catalyst composition has a yield stress of 0.2 N to 8 N.

2. The coating-type catalyst composition according to claim 1, wherein the catalytic system comprises a support, a catalytically active component, and a catalytic promoter; and based on the total mass of the coating-type catalyst composition being 100%, the content of the support is 10% to 50%; the content of the catalytically active component is 0.3% to 5%; and the content of the catalytic promoter is 0.6% to 7%.

3. The coating-type catalyst composition according to claim 2, wherein the support comprises one or a combination of two or more of a titanium oxide, an iron oxide, a manganese oxide, a cerium oxide, and a molecular sieve; and/or
the catalytically active component comprises one or a combination of two or more of vanadium-based salts, iron-based salts, cerium-based salts, and copper-based salts; and/or
the catalytic promoter comprises one or a combination of two or more of ammonium metatungstate, ammonium heptamolybdate, and ammonium molybdate.

4. The coating-type catalyst composition according to any one of claims 1 to 3, wherein the binder comprises an inorganic binder, preferably, the binder comprises one or a combination of two or more of alumina sol, silica sol, and titania sol; and/or
the plasticizer comprises one or a combination of two or more of a cellulose-based plasticizer and an epoxy-based plasticizer.

5. The coating-type catalyst composition according to any one of claims 1 to 4, wherein the coating-type catalyst composition further comprises one or a combination of two or more of a pH regulator, an antifoaming agent, a dispersant, and water;
preferably, based on the total mass of the coating-type catalyst composition being 100%, the content of the pH regulator is 0% to 8%; the content of the antifoaming agent is 0.1% to 2%; the content of the dispersant is 0.5% to 3%, and the content of the water is 30% to 85%;
more preferably, the coating-type catalyst composition has a viscosity of 20 mPa·s to 80 mPa·s.

6. The coating-type catalyst composition according to claim 5, wherein the pH regulator comprises one or a combination of two or more of ammonium hydroxide, sodium hydroxide, potassium hydroxide, ethanolamine, oxalic acid, nitric acid, and acetic acid; and/or
the antifoaming agent comprises one or a combination of two or more of an aliphatic alkane-based monohydric alcohol and an organosilicon compound; and/or
the dispersant comprises one or a combination of two or more of ammonium polyacrylate, fatty alcohol polyoxyethylene ether, stearic acid, polyethylene glycol, and polypropylene glycol.

7. A method for preparing the coating-type catalyst composition according to any one of claims 1 to 6, comprising a step of mixing and ball milling respective components of the coating-type catalyst composition.

8. The preparation method according to claim 7, comprising the following steps:
dissolving a catalytically active component and a catalytic promoter into water, and adjusting a pH value with a pH regulator to obtain a precursor solution;
adding a dispersant, an antifoaming agent, and a binder to the precursor solution to obtain a premix;
adding a support to the premix to obtain a mixed precursor; and
ball milling the mixed precursor and then adding a plasticizer to obtain a coating-type catalyst composition.

9. A catalytic filter tube, comprising a base material with a cavity, a tube wall of the base material being made of lapping fibers and having a fiber pore channel;
at least a part of a catalyst being present in the fiber pore channel of the tube wall to form a composite layer; and the composite layer having a thickness less than or equal to the thickness of the base material; wherein
the catalyst is derived from the coating-type catalyst composition according to any one of claims 1 to 8.

10. A method for preparing the catalytic filter tube according to claim 9, comprising: a step of coating a coating-type catalyst composition on an inner surface and/or an outer surface of a base material, and a step of allowing the coating-type catalyst composition to penetrate into a fiber pore channel and then conducting a thermal treatment;
wherein the inner surface of the base material is a surface close to the cavity, and the outer surface of the base material is a surface away from the cavity.
